# EUROPÄISCHE PATENTSCHRIFT

(11) **EP 0 776 801 B1**
(45) Veröffentlichungstag und Bekanntmachung des Hinweises auf die Patenterteilung: **13.10.1999**
(21) Anmeldenummer: 96119125.1
(22) Anmeldetag: 28.11.1996
(51) Int. Cl.: B60R 22/34, B60R 22/44

(54) **Gurtautomat**
Belt retractor
Enrouleur de ceinture

(30) Priorität: 28.11.1995 DE 19544302
(43) Veröffentlichungstag der Anmeldung: 04.06.1997
(73) Patentinhaber: Ingenieurbüro Mittnacht Diez GbR Technische Entwicklungen, 81247 München (DE)
(72) Erfinder: Diez, Martin, 81247 München (DE)
(74) Vertreter: von Kirschbaum, Albrecht, Dipl.-Ing.

(56) Entgegenhaltungen:
- DE-A- 2 618 715
- DE-A- 3 313 580
- DE-A- 4 241 730
- FR-A- 2 295 765
- FR-A- 2 296 438

## Beschreibung

Die Erfindung betrifft einen Gurtautomat nach dem Oberbegriff des Anspruchs 1, wie er z.B. aus DE-A-2 618 715 bekannt ist.

Bei herkömmlichen Gurtautomaten, wie sie beispielsweise in PKW's eingesetzt werden, ist ein Gurtband auf einer in einem Gehäuse untergebrachten Wickelwelle aufgewickelt, die mit einem Ende einer Spiralfeder verbunden ist, deren anderes Ende fest mit dem Gehäuse verbunden ist. Bei den bekannten Gurtautomaten wird die beim Herausziehen bzw. Abrollen des Gurtbandes aufgebrachte Arbeit in der Spiralfeder gespeichert, da die Spiralfeder durch das Drehen der Wickelwelle gespannt wird. Die in der Spiralfeder gespeicherte Energie wird später beim Abrollen des Gurtbandes wieder freigegeben.

Bei herkömmlichen Gurtautomaten dreht sich beim vollständigen Abrollen des Gurtbandes die Wickelwelle im allgemeinen zwölfmal, und die Spiralfeder bildet somit beim Abwickeln des Gurtbandes aus dem Gehäuse eine der Anzahl der Umdrehungen der Wickelwelle entsprechende Anzahl Windungen. Da Spiralfedern hauartbedingt steigende Kraft-Kennlinien über die Anzahl der Drehungen aufweisen, nimmt die zum Herausziehen des Gurtbandes erforderliche Zugkraft mit zunehmender Auszugslänge des Gurtbandes entsprechend zu.

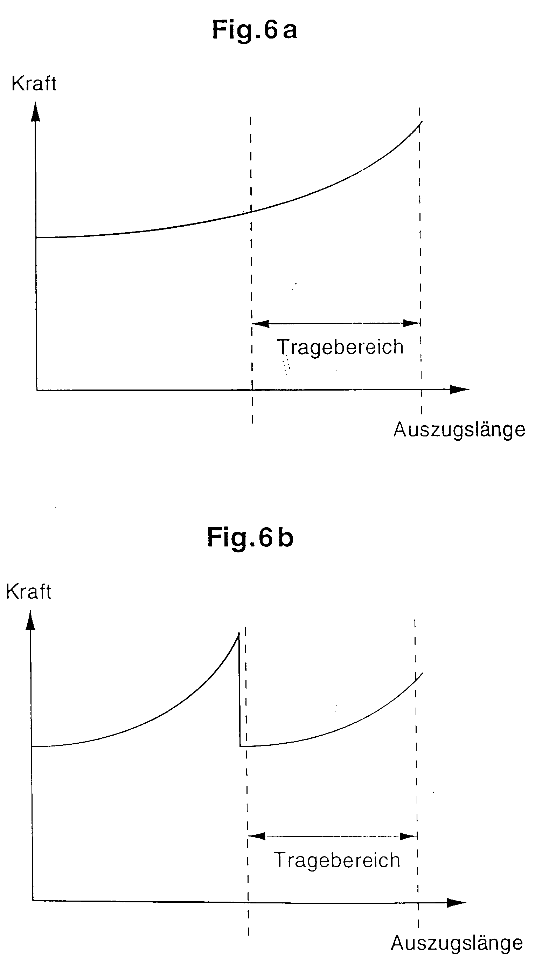

Der Verlauf der bezüglich der Auszugslänge aufzubringenden Kraft bei solchen Gurtautomaten steigt entsprechend eines in Fig.6a skizzierten Kurve exponentiell mit wachsender Auszugslänge. Somit treten insbesondere im sogenannten Tragebereich hohe Zugkräfte im Gurt auf, wobei mit Tragebereich der Bereich bezeichnet ist, innerhalb dessen das Gurtband zusätzlich zu der für das Anschnallen notwendigen Auszugslänge ausziehbar sein soll, beispielsweise um zum Handschuhfach zu gelangen. Die in Fig.6a, gestrichelte linke Linie des Tragebereichs zeigt die Auszugslänge des Gurtbandes an, bei der eine angeschnallte Person zurückgelehnt im Sitz sitzt, während die in Fig.6a rechts eingetragene, gestrichelte Linie das durch die Länge des Gurtbandes bestimmte Ende des Tragebereichs und somit die maximale Bewegungsfreiheit einer angeschnallten Person anzeigt.. In vollständig ausgezogenem Zustand wirkt somit die größte Kraft auf das Gurtband.

Eine solcher, in Fig.6a skizzierter Kraftverlauf erweist sich einerseits bereits beim Herausziehen und damit beim Abrollen des Gurtbandes hinsichtlich des Kraftaufwands als unangenehm und außerdem als unkonfortabel, wenn der Gurt angelegt ist, da das Gurtband einen relativ hohen Anlagedruck auf den Körper ausübt, was insbesondere bei längeren Fahrten als eine unnötige Belästigung empfunden wird. Besonders nachteilig ist dies bei Fahrzeugen, die keinen B-Holm haben, da die obere Gurtbandhalterung unterhalb der Schulterhöhe liegt und somit der vom Gurtband auf die Schulter ausgeübte Druck gegenüber im B-Holm angeordneten Gurtautomaten noch größer ist.

Daher werden zur Zeit sogenannte Komfort-Gurtautomaten angeboten, die eine Verbesserung der vorstehend beschriebenen Gurtautomaten darstellen, da bei ihnen die im Tragebereich auftretenden Kräfte geringer als bei herkömmlichen Gurtautomaten sind.

Bei einer bekannten Ausführungsform eines solchen Komfort-Gurtautomaten sind zwei, parallel angeordnete Federn vorgesehen, von denen eine über eine mechanische oder elektrische Vorrichtung zu- und abschaltbar ist. Diese Feder wird zu Beginn des Herausziehens des Gurtbandes aus dem Gehäuse zugeschaltet, wodurch sie gespannt wird. Kurz vor Erreichen des durch die linke gestrichelte Linie angezeigten Beginns des Tragebereichs wird diese Feder abgeschaltet, so daß nur noch die zweite ständig wirksame Feder auf das Gurtband einwirkt. Das weitere Herausziehen des Gurtbandes erfordert somit einen geringeren Kraftaufwand als bei den eingangs beschriebenen Gurtautomaten, da im Tragebereich eines Komfort-Gurtautomaten geringere Kräfte auf das Gurtband wirken.

Der sich hierdurch ergebende Kraftverlauf beim Herausziehen eines Gurtbandes ist in Fig.6b schematisch dargestellt. Beim Lösen des Gurtbandes aus dem Gurtschloß wird die schaltbare Feder wieder zugeschaltet, um ein einwandfreies Aufwickeln des Gurtbandes sicherzustellen. Gegenüber den herkömmlichen Gurtautomaten ist bei den Komfort-Gurtautomaten vor allem die aufwendige elektrische oder mechanische Steuerung zum Zu- oder Abschalten der schaltbaren Feder sowie die erforderliche zusätzliche Feder nachteilig.

Nachteilig bei den vorstehend beschriebenen, bekannten Gurtautomaten ist zum einen, daß zum Speichern von Energie die Feder bzw. die Federn entsprechend der hohen Anzahl Umdrehungen der Wickelwelle entsprechend gespannt werden müssen und daß dadurch zum anderen die entsprechend hohe Anzahl Windungen der Feder bzw. der Federn in gespanntem Zustand aneinander anliegen und somit hysteresebelastet sind. Dadurch ergibt sich ein Energieverlust, der durch den Einsatz entsprechend starker Federn kompensiert werden muß. Dadurch wirken noch höhere Kräfte auf das Gurtband, wodurch der Komfort weiter abnimmt.

Bei anderen Ausführungsformen von Komfort-Gurtautomaten ist zwischen der Wickelwelle, auf die das Gurtband auf- und von welcher es abgewickelt wird, und der mit dem Gehäuse verbundenen Spiralfeder ein Zahnradgetriebe angeordnet, welches die Umdrehungen der Wickelwelle untersetzt und über veränderliche Hebelarme auf eine oder mehrere Federn wirkt. Eine solcher veränderlicher Hebelarm ist in Verbindung mit einem Zahnradgetriebe beispielsweise aus DE 26 18 715 bekannt. Dort ist ein Getriebe zur kontinuierlichen Drehzahländerung einer begrenzten Drehbewegung beschrieben, indem zwei miteinander in Eingriff stehende Zahnräder, deren Teilkreisradien sich spiralförmig, stetig ändern, eingesetzt werden.

Bei diesen sehr aufwendigen Lösung treten aufgrund des Einsatzes von Zahnrädern zusätzliche Reibungsverluste im Getriebe auf, weshalb stärkere Federn erforderlich sind, da gewährleistet sein muß, daß auch auf das aufgewickelte Gurtband eine gewisse Restkraft ausgeübt wird, um ein vollständiges Aufwickeln sicherzustellen. Der durch das Zwischenschalten des Zahnradgetriebes erreichte Komfort im Tragebereich wird somit wieder verschlechtert.

Bei anderen Komfort-Gurtautomaten sind zwischen der Wickelwelle und einer Rückzugsfeder, die zum Aufwickeln des Gurtbandes vorgesehen ist, eine oder mehrere kegelige Spiralen angeordnet. Hierdurch wird der während des Gurtbandauszugs auf die Rückzugsfeder wirkende Hebelarm verändert, so daß im Tragebereich dieses Komfort-Gurtautomaten geringere Kräfte als bei herkömmlichen Gurtautomaten auftreten. Die Rückzugsfeder ist über einen dünnen Faden, der als Zugmittel verwendet wird, mit einer oder mehreren Spiralen verbunden, deren Spiralwindungen ähnlich einem Gewinde nebeneinander angeordnet sind. Da die Anzahl der Spiralwindungen der Umdrehungsanzahl der Wickelwelle entsprechen muß, die im allgemeinen beim vollständigen Abwickeln des Gurtbandes zwölf Umdrehungen beträgt, ergibt sich eine große Bauhöhe dieses Komfort-Gurtautomaten.

Beispielsweise ist aus DE 42 41 730 A1 eine der vorstehend beschriebenen Anordnung ähnliche Anordnung bekannt. Hierbei werden anstelle kegeliger Spiralen zum Auf- und Abwickeln eines dünnen Faden Seilrollen vorgesehen, von denen die eine halbkugelförmig und die andere zu dieser komplementär ausgebildet ist. Aufgrund der Form der verwendeten Seilrollen läßt sich der Kraftverlauf im Tragebereich des Gurtbandes einstellen. Den vorstehend beschriebenen Nachteil, daß solche Rollen mindestens zwölf Windungen aufweisen müssen, weist auch der in DE 42 41 730 beschriebene Gurtautomat auf.

Aus DE 33 13 580 ist eine Aufwickelvorrichtung für Gurtautomaten bekannt, in welcher zusätzlich zu einem Zahnradgetriebe spiralgenutete Kegelscheiben vorgesehen sind. Die spiralgenuteten Kegelscheiben, welche mittels eines dreidimensionalen, spiralförmigen Zugglieds miteinander verbunden sind, haben aufgrund der vorgeschalteten Zahnradstufe eine geringere Anzahl Windungen als die vorstehend beschriebenen Seilrollen oder kegeligen Spiralen. Bei dieser Aufwickelvorrichtung ist jedoch weiterhin nachteilig, daß zur Untersetzung Zahnräder vorgesehen werden sein müssen. Aufgrund der zwischen Zahnrädern auftretenden Reibung treten Reibungsverluste auf, die durch eine entsprechend stärkere Feder kompensiert werden müssen. Die im Tragebereich auftretenden Kräfte sind somit, da die Rückzugsfeder in diesem Zustand bereits relativ stark gespannt ist, relativ hoch. Ferner ist die Bauhöhe aufgrund des Hintereinanderschaltens einer Zahnradstufe und der spiralgenuteten Kegelscheibe entsprechend groß.

Aufgabe der Erfindung ist es daher, einen Gurtautomaten mit einem möglichst kleinen Raumbedarf zu schaffen, bei dem auch vor allem im Tragebereich auf das Gurtband wirkende, möglichst niedrige Kräfte erhalten bleiben und die Hystereseverluste möglichst gering sind. Ferner soll der Verlauf der Kraft in Abhängigkeit von der gesamten Auszugslänge einstellbar sein.

Gemäß der Erfindung ist diese Aufgabe bei einem Gurtautomaten nach dem Oberbegriff des Anspruchs 1 durch die Merkmale in dessen kennzeichnenden Teil gelöst. Vorteilhafte Weiterbildungen sind Gegenstand der auf Anspruch 1 unmittelbar oder mittelbar rückbezogenen Ansprüche.

Gemäß der Erfindung ist bei einem Gurtautomaten zwischen dessen Wickelwelle und dessen Energiespeicher ein mehrstufiges Untersetzungsgetriebe angeordnet, zwischen dessen Elementen mehrere Bänder vorgesehen sind. Gemäß einer bevorzugten Ausführungsform des erfindungsgemäßen Gurtautomaten ist durch ein erstes Band eine auf der Wickelwelle des Gurtautomaten vorgesehene kreisförmige Scheibe mit einer ersten Doppelscheibe verbunden, die durch zwei konzentrische Scheiben mit unterschiedlichen Radien gebildet ist. Zwischen der kleineren Scheibe der ersten Doppelscheibe und einer größeren Scheibe einer zweiten Doppelscheibe, die analog der ersten Doppelscheibe, gegebenenfalls mit anders dimensionierten Scheibendurchmessern ausgeführt ist, ist ein zweites Band vorgesehen. Schließlich ist die kleinere Scheibe der zweiten Doppelscheibe mittels eines dritten Bandes mit einer Scheibe verbunden, die eine im wesentlichen spiralförmige Umfangslinie aufweist und daher im folgenden der Einfachheit halber auch als Spiralscheibe bezeichnet wird. Über die Spiralscheibe wird dem Energiespeicher Energie zugeführt oder von diesem aus abgeführt.

Mit Hilfe des gemäß der Erfindung ausgebildeten Untersetzungs-Getriebes werden somit die zum vollständigen Abrollen des Gurtbandes bei herkömmlichen Gurtautomaten erforderlichen zwölf Umdrehungen der Wickelwelle in weniger als eine Umdrehung der Spiralscheibe, vorzugsweise beispielsweise in eine 0,75-Umdrehung und damit auch in weniger als eine Umdrehung einer gemäß einer bevorzugten Weiterbildung der Erfindung als Energiespeicher vorgesehenen Spiralfeder umgewandelt. Damit ist der bei den bekannten Gurtautomaten in der Feder bzw. den Federn entstandene Hystereseverlust bei dem erfindungsgemäßen Gurtautomaten ausgeschlossen, da bei Verwenden einer Spiralfeder als Energiespeicher deren einzelne Windungen nicht mehr aneinander anliegen.

Aufgrund der Ausbildung der spiralförmigen Umfangslinie der Spiralscheibe ist der jeweils wirksame Hebelarm in Abhängigkeit von der auf der Spiralscheibe aufgebrachten Länge des dritten Verbindungsbandes unterschiedlich. Somit hängt die Kraft, die auf das dritte, zwischen der Spiralscheibe und der kleinen Scheibe der zweiten Doppelscheibe vorgesehene Band und damit auch über die beiden anderen Bändern letztendlich auf das Gurtband wirkt, ganz wesentlich von der Ausbildung der Form der Spiralscheibe ab.

Durch ein entsprechendes Ausbilden und Auslegen der Spiralscheibe sowie durch ein entsprechendes Abstimmen der Verhältnisse zwischen den Radien der Doppelscheiben läßt sich der Verlauf einer zum Abrollen des Gurtbandes erforderlichen Kraft über die gesamte Auszugslänge des Gurtbandes so einstellen, daß in dem eingangs definierten Tragebereich die im Gurtband wirkende Kraft deutlich geringer ist als bei dem bekannten Gurtautomaten. Im Unterschied zu dem in Fig.6a bzw. 6b wiedergegebenen Verlauf einer beim Abrollen eines Gurtbandes auftretenden Kraft ist der Kraftverlauf bei dem erfindungsgemäßen Gurtband konstant oder nimmt sogar linear ab.

Gemäß einer weiteren bevorzugten Ausführungsform ist eine Spiralscheibe so ausgelegt, daß sie nur in Teilbereichen eine spiralförmig verlaufende Umfangslinie aufweist. Mit einer derart ausgeführten Spiralscheibe ist zu erreichen, daß beim Abwickeln des Gurtbandes der auf einem verhältnismäßig hohen Niveau liegende konstante oder linear abfallende Kraftverlauf, d.h. die aufzubringende Kraft kurz vor Erreichen des sogenannten Tragebereichs auf ein erheblich niedrigeres Kraftniveau sprunghaft abnimmt und auf diesem niedrigen Niveau dann der Kraftverlauf ebenfalls wieder konstant oder linear fallend ist.

Durch die Erfindung ist somit ein Gurtautomat geschaffen, bei welchem durch ein entsprechendes Auslegen des mehrstufigen Untersetzungsgetriebes und insbesondere durch die Ausbildung und Auslegung der dem Energiespeicher zugeordneten Spiralscheibe die beim Abrollen des Gurtbandes erforderliche Kraft einstellbar ist und insbesondere die aufzubringende Kraft im sogenannten Tragebereich sehr gering ist und damit auch der auf den Insassen wirkende Anliegedruck entsprechend niedrig ist.

Sowohl bei den bekannten als auch bei den erfindungsgemäßen Gurtautomaten ist in dem Energiespeicher eine bestimmte Restkraft erforderlich, welche auf das aufgewickelte Gurtband wirkt, damit es sicher in einem den Gurtautomaten umgebenden Gehäuse zurückgehalten wird. Diese bei den verschiedenen Ausführungsformen wie auch bei dem erfindungsgemäßen Gurtautomaten vorgegebene Restkraft stellt den Ausgangspunkt der jeweiligen Kraftverläufe dar.Während bei den verschiedenen Ausführungen der bekannten Gurtautomaten die Kraftverläufe so sind, wie beispielsweise in Fig.6a oder 6b wiedergegeben, ist bei einem gemäß der Erfindung ausgeführten Gurtautomaten besonders vorteilhaft, daß ausgehend von der vorgegebenen Restkraft nicht nur ein konstanter, sondern sogar ein linear fallender Kraftverlauf realisierbar ist.

Obendrein ist bei dem erfindungsgemäßen Gurtautomat vorteilhaft, daß insbesondere bei den Doppelscheiben nur sehr kleine Auf- und Abwickeldurchmesser erforderlich sind und die beim erfindungsgemäß vorgesehenen Mehrstufen-Untersetzungsgetriebe verwendeten Bänder, beispielsweise nur 0,02 mm dick sein müssen, wobei die erforderliche Festigkeit der Bänder über die Breite erreichbar ist.

Nachfolgend wird die Erfindung anhand von bevorzugten Ausführungsformen unter Bezugnahme auf die anliegenden Zeichnungen im einzelnen erläutert. Es zeigen:
- Fig.1: eine schematische Seitenansicht einer bevorzugten Ausführungsform eines Gurtautomaten mit aufgewickeltem Gurtband;
- Fig.2: eine schematische Vorderansicht des Gurtautomaten der Fig.1;
- Fig.3: eine schematische Seitenansicht des Gurtautomaten der Fig.1 und 2 mit abgewickeltem Gurtband;
- Fig.4a und 4b: schematische Ansichten von bevorzugten Ausführungsformen von in dem Gurtautomaten der Erfindung verwendeten Spiralscheiben;
- Fig.5a und 5b: Graphen von Kurvenverläufen von erfindungsgemäße ausgelegten Gurtautomaten, bei welchen die Kraft auf der Abszisse und die Auszugslänge eines Grutbandes auf der Ordinate aufgetragen sind, und
- Fig.6a und 6b: den Graphen der Fig.5a und 5b entsprechende Graphen von Kurvenverläufen bekannter Gurtautomaten.

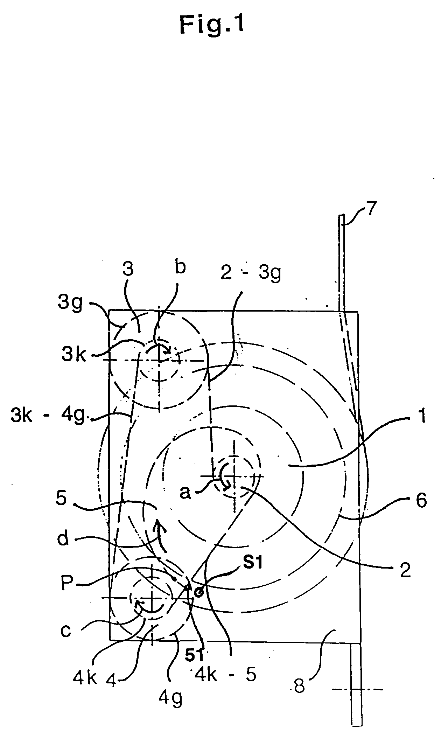

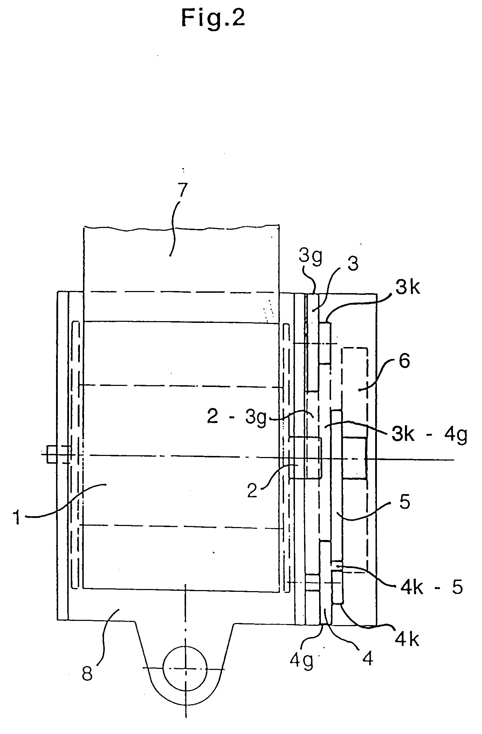

In Fig.1 und 2 sind eine schematische Seitenansicht bzw. eine schematische Vorderansicht einer bevorzugten Ausführungsform eines Gurtautomaten dargestellt. In Fig.1 und 2 ist ein Gurtband 7 vollständig auf eine in einem Gehäuse 8 gelagerte Wickelwelle 1 aufgewickelt, mit welcher eine kreisförmige Scheibe 2 mit einem verhältnismäßig kleinem Durchmesser fest verbunden ist. Ferner sind im Gehäuse 8 eine erste und eine zweite Doppelscheibe 3 bzw. 4 sowie eine Scheibe 5 mit einer im wesentlichen spiralförmigen Umfangslinie drehbar gelagert. Die Scheibe 5 wird der Einfachheit halber im folgenden als Spiralscheibe 5 bezeichnet. Die beiden Doppelscheiben 3 und 4 bestehen jeweils aus zwei konzentrischen Scheiben 3k und 3g, bzw. 4k und 4g, wobei durch die Buchstaben k und g zum Ausdruck gebracht ist, daß die Scheibe 3k bzw. 4k einen kleineren Radius haben als die mit 3g bzw. 4g bezeichneten Scheiben mit einem größeren Radius. Die beiden Doppelscheiben 3 und 4 sind konzentrisch und vorzugsweise einteilig ausgeführt.

Zwischen der mit der Wickelwelle verbundenen Scheibe 2 und der größeren Scheibe 3g der ersten Doppelscheibe 3 ist ein erstes Band 2-3g vorgesehen; zwischen der kleineren Scheibe 3k der ersten Doppelscheibe 3 und der größeren Scheibe 4g der zweiten Doppelscheibe 4 ist ein zweites Band 3k-4g und zwischen der kleinen Scheibe 4k der zweiten Doppelscheibe und der Spiralscheibe 5 ist ein drittes Band 4k-5 vorgesehen.

In Fig.1 bis 3 ist als Energiespeicher eine Spiralfeder 6 schematisch angedeutet, welche mit einem Ende an der Spiralscheibe 5 und mit dem anderen Ende an dem Gehäuse 8 befestigt ist. Die drei Bänder 2-3g, 3k-4g und 4k-5 sind somit in verschiedenen Ebenen angeordnet, wie der Seitenansicht der Fig.2 zu entnehmen ist. Die mit der Wickelwelle verbundene kreisförmige Scheibe 2, die beiden Doppelscheiben 3 und 4 und die Spiralscheibe 5 sowie die zwischen den einzelnen Scheiben vorgesehenen drei Bänder 2-3g, 3k-4g und 4k-5 bilden das mehrstufige Untersetzungsgetriebe.

Durch die bei den drei Bändern mit einem Bindestrich versehenen Bezugszeichen ist jeweils zum Ausdruck gebracht, mit welchen beiden Scheiben die beiden Enden des jeweiligen Bandes verbunden sind. Das bedeutet, beispielsweise das zweite Band 3k-4g ist mit einem Ende an der kleinen Scheibe 3k der ersten Doppelscheibe 3 und mit dem anderen Ende mit der großen Scheibe 4g der zweiten Doppelscheibe 4 verbunden.

Wenn das Gurtband 7 aus dem beispielsweise am B-Holm angebrachten Gehäuse 8 herausgezogen wird, wird dadurch das Gurtband 7 von der Wickelwelle 1 abgewickelt und diese dadurch in der durch einen Pfeil a in Fig.1 angezeigten Richtung gedreht. Dadurch wird die mit der Wickelwelle 1 fest verbundene Scheibe 2 ebenfalls in der durch den Pfeil a angezeigten Richtung entgegen dem Uhrzeigersinn gedreht. Bei dieser Drehbewegung wird das erste Band 2-3g von der größeren Scheibe 3g der ersten Doppelscheibe 3 abgewickelt und auf die kreisförmige Scheibe 2 aufgewickelt; hierbei dreht sich die erste Doppelscheibe 3 in Richtung eines Pfeils b im Uhrzeigersinn. Gleichzeitig wird das zweite Band 3k-4g von der größeren Scheibe 4g der zweiten Doppelscheibe 4 abgewickelt und auf die kleinere Scheibe 3g der ersten Doppelscheibe 3 aufgewickelt, so daß sich die zweite Doppelscheibe 4 in der durch einen Pfeil c in Fig.1 angedeuteten Richtung im Uhrzeigersinn dreht. Durch die Drehbewegung der zweiten Doppelscheibe 4 im Uhrzeigersinn wird das dritte Band 4k-5 auf die kleine Scheibe 4k der zweiten Doppelscheibe 4 aufgewickelt.

Das dritte Band 4k-5, welches von der Doppelscheibe 4 bzw. deren kleinen Scheibe 4k zur Spiralscheibe 5 führt, liegt an deren spiralförmigen Umfangslinie an und ist an der Spiralscheibe 5 an einem Punkt P befestigt. Durch das Aufwickeln des Bandes 4k-5 auf die kleine Scheibe 4k der Doppelscheibe 4 in der durch den Pfeil c angezeigten Richtung wird die Spiralscheibe 5 in der durch einen Pfeil d angezeigten Richtung im Uhrzeigersinn gedreht. Durch die Drehbewegung der Spiralscheibe 5 im Uhrzeigersinn wird die als Energiespeicher dienende Spiralfeder 6 (Fig.2) gespannt, die, wie bereits ausgeführt, mit einem Ende an der Spiralscheibe 5 und mit dem anderen Ende am Gehäuse 8 befestigt ist.

Nach einem Lösen des Gurtbandes 7 aus einem nicht dargestellten Gurtschloß werden die beiden Doppelscheiben 3 und 4 sowie die kreisförmige Scheibe 2 und die Spiralscheibe 5, die durch die zwischen diesen Scheiben angeordneten drei Bänder 2-3g, 3k-4g und 4k-5 verbunden sind, entgegen den durch die Pfeile a bis d angezeigten Richtungen gedreht. Hierbei ist dann die Restkraft der als Energiespeicher dienenden Spiralfeder 6 so bemessen, daß sichergestellt ist, daß das auf die Wickelwelle 1 aufgewickelte Gurtband sicher in dem Gehäuse 8 zurückgehalten wird.

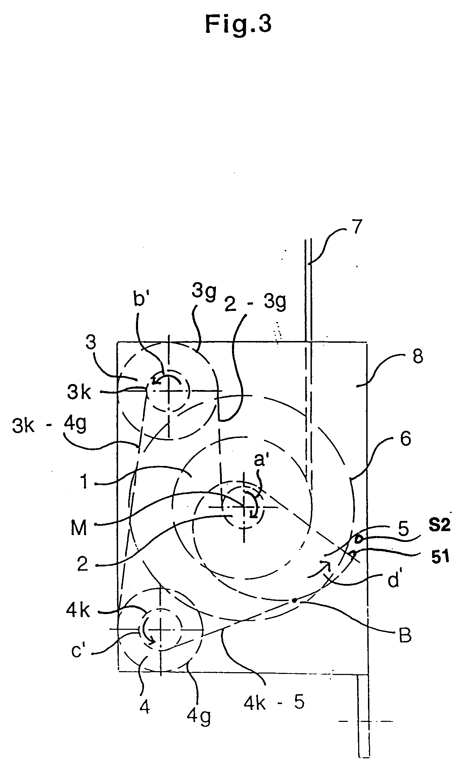

In Fig.3 ist eine schematische Seitenansicht der in Fig.1 und 2 dargestellten Ausführungsform des Gurtautomaten wiedergegeben, in welcher das Gurtband 7 vollständig von der Wickelwelle 1 abgewickelt ist. Aufgrund der vorstehend beschriebenen Verbindung zwischen der Wickelwelle 1 bzw. der mit dieser fest verbundenen Kreisscheibe 2 und der mit dem Energiespeicher 6 verbundenen Spiralscheibe 5 über die drei dazwischen vorgesehenen Bänder befindet sich die Spiralscheibe 5 nunmehr in einer Lage, die gegenüber der in Fig.1 wiedergegebenen Lage in der dargestellten Ausführungsform um 270° gedreht ist.

Diese geringfügige Drehung der Spiralscheibe 5 um nur eine Dreiviertel-Umdrehung im Vergleich zu zwölf Umdrehungen der Wickelwelle 1, wenn das Gurtband 7 von letzterer vollständig abgewickelt ist, ist aufgrund der durch die beiden Scheiben 2 und 5 sowie die beiden Doppelscheiben 3 und 4 erzielten Untersetzung möglich. Aufgrund der festen Verbindung der Spiralfeder 6 einerseits mit der Spiralscheibe 5 und andererseits mit dem Gehäuse 8 wird die Spiralfeder 6 in der dargestellten, bevorzugten Ausführungsform ebenfalls nur um 270° vorgespannt.

Wird nun das Gurtband 7 freigegeben, indem es aus dem Schloß gelöst wird, damit es sich auf die Wickelwelle 1 aufwickelt, bewirkt die Freigabe der im Energiespeicher 6 gespeicherten Energie, d.h. das Entspannen der Spiralfeder 6 eine 0,75-Drehbewegung der Spiralscheibe 5, sowie Drehbewegungen der beiden Doppelscheiben 3 und 4 und der Kreisscheibe 2 und damit der mit dieser verbundenen Wickelwelle 1 in den durch Pfeile a' bis d' in Fig.3 angezeigten Pfeilrichtungen, welche, wie vorstehend bereits ausgeführt ist, den in Fig.1 eingetragenen Richtungen der Pfeile a bis d entgegengesetzt sind.

Das beim Abwickeln des Gurtbandes 4 in der als Energiespeicher dienenden Spiralfeder 6 gespeicherte Drehmoment wird aufgrund der Ausbildung der Spiralscheibe 5 in eine sich während des Aufwickelns des Gurtbandes 7 verändernde, nicht konstante Kraft in dem dritten Band 4k-5 umgewandelt, und zwar deswegen, da sich aufgrund der spiralförmig ausgebildeten Umfangslinie der Spiralscheibe 5 der Hebelarm bei einer gleichbleibenden Drehmoment-Abgabe der Spiralfeder 6 in Abhängigkeit von der an der Spiralscheibe 5 anliegenden Länge des dritten Bandes 4k-5 ändert. Der Hebelarm ist hierbei jeweils der Abstand zwischen dem mit M bezeichneten Mittelpunkt der Wickelwelle 1 und einem Berührungspunkt B zwischen dem Band 4k-5 und der Spiralscheibe 5.

Die auf das Band 4k-5 wirkende Kraft wird über die beiden Doppelscheiben 4 und 5, die Kreisscheibe 2 und die mit dieser verbundenen Wickelwelle 1 an das Gurtband 7 übertragen. Die auf das Gurtband 7 wirkende Kraft ist somit unter anderem von den Verhältnissen der Radien der beiden unterschiedlich großen Scheiben 3k und 3g bzw. 4k und 4g der beiden Doppelscheiben 3 und 4, der Ausbildung und Form der spiralförmigen Umfangslinie der Spiralscheibe 5 sowie der Auszugslänge des Gurtbandes 7 abhängig. Hierbei wird unter Auszugslänge die von der Wickelwelle 1 abgewickelte Länge des Gurtbandes 7 verstanden.

Zusätzlich ist die auf das Gurtband 7 wirkende Kraft auch von der Dimensionierung der als Energiespeicher dienenden Spiralfeder 6 sowie von der Dicke des Gurtbandes 7 abhängig, da sich je nach Auszugslänge und der sich daraus ergebenden Anzahl der auf der Wickelwelle 1 verbleibenden Wicklungen der Hebelarm zwischen dem Gurtband 7 und der Wickelwelle 1 ändert. Der Kraftverlauf im Gurtband 7 bezüglich der Auszugslänge ist somit von einer Anzahl Parameter abhängig; er kann jedoch in einfacher Weise vor allem durch die Ausbildung und Form der spiralförmigen Umfangslinie der Spiralscheibe 5 beeinflußt werden.

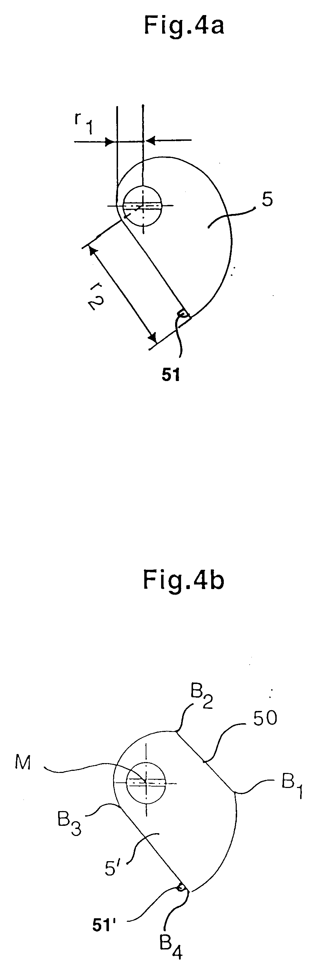

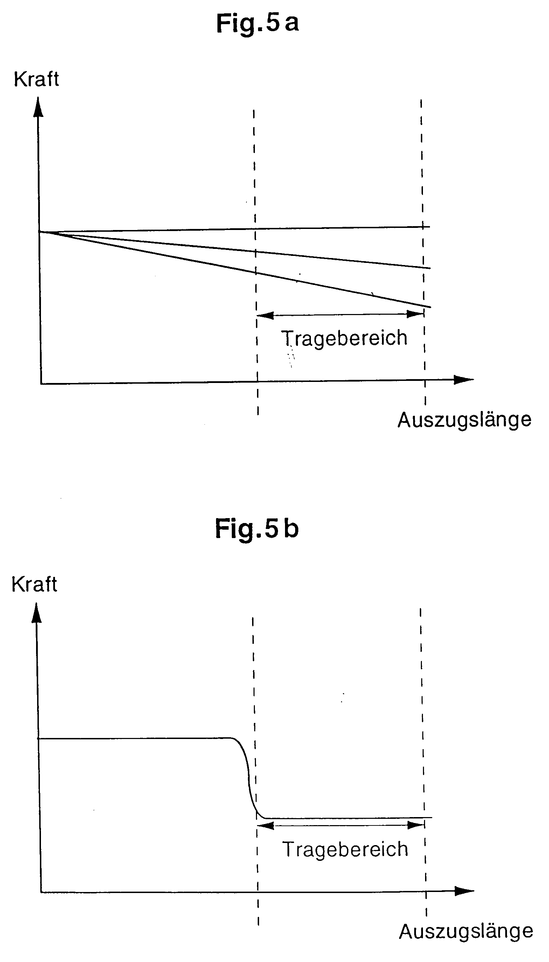

Bevorzugte Ausführungsformen der Spiralscheiben sind in Fig.4a und 4b schematisch dargestellt. Mit der in Fig.4a dargestellten Spiralscheibe 5 ist beispielsweise ein linear fallender Kraftverlauf im Gurtband 7 bezüglich der Auszugslänge des Gurtbandes 7 erreichbar. Ein mit der in Fig.4a dargestellten Spiralscheibe 5 erreichbarer Kraftverlauf ist durch Graphen in Fig.5a dargestellt, wobei in Fig.5a auf der Abszisse die Kraft und auf der Ordinate die Auszugslänge aufgetragen ist. Hierbei ist die Steigung der Kennlinie des Kraftverlaufs über der Auszugslänge durch ein Radienverhältnis r1/r2 der Spiralscheibe 5 in Fig.4a einstellbar.

Als Beispiele sind in Fig.5a mehrere Kurvenverläufe der Kraft bezüglich der Auszugslänge für verschiedene Ausbildungen der der Fig.4a entnehmbaren Spiralscheibe 5. wiedergegeben. Jedoch die in Fig.5a wiedergegebenen Kennlinien zeigt deutlich, daß die im sogenannten Tragebereich auftretenden Kräfte im Vergleich zu den bei herkömmlichen Gurtautomaten auftretenden Kräften erheblich geringer sind, wie ein Vergleich der Kennlinien in Fig.5a und Fig.6a eindrucksvoll belegt.

In Fig.4b ist eine andere bevorzugte Ausführungsform einer Spiralscheibe 5' wiedergegeben, welche nur in Teilbereichen, nämlich den Bereichen zwischen den Punkten B1 und B4 sowie B2 und B3 spiralförmig ausgeführt ist. Wird in dem erfindungsgemäßen Gurtautomaten eine der Spiralscheibe 5' in Fig.4b entsprechende Ausführung verwendet, so kann, wie dem Graphen der Fig.5b zu entnehmen ist, im sogenannten Tragebereich eine sehr niedrige konstante Kraft realisiert werden, die auf das Gurtband wirkt. Diese sprunghaft eintretende Kraftverringerung im Gurtband 7, während dieses von der Wickelwelle 1 abgewickelt wird, ist durch eine entsprechend ausgebildete Abflachung 50 der Spiralscheibe 5' zwischen den Punkten B1 und B2 erreichbar, da beim Abwickeln des Bandes 4k-5 von der Spiralscheibe 5' (siehe Fig.4b) der Hebelarm zwischen dem Berührungspunkt B2 und dem Mittelpunkt M der Spiralscheibe 5' auf einen erheblich größeren Hebelarm zwischen dem Punkt B1 und dem Mittelpunkt M vergrößert wird.

Da bei den verschiedenen Ausführungsformen eine Drehbewegung der Spiralscheibe 5 bzw. 5' um weniger als eine Umdrehung auch bei einem maximalen Auszug des Gurtbandes 7 erreicht ist, verlaufen die Kennlinien der Kraft sowohl beim Auf- als auch beim Abwickeln des Gurtbandes 7 von der bzw. auf die Wickelwelle annähernd gleich. Der Grund hierfür ist im wesentlichen darin zu sehen, daß im Gegensatz zu bekannten Gurtautomaten, bei welchen die einzelnen Windungen der Spiralfeder bei aufgewickeltem Gurtband aneinander anliegen, die gemäß der Erfindung als Energiespeicher verwendete Spiralfeder 6 nicht mehrere Umdrehungen ausführen muß, sondern nur einmal um weniger als eine Umdrehung, in der dargestellten Ausführungsform um etwa 270°, gedreht wird. Aus diesem Grund kommt es im Unterschied zu den in bekannten Gurtautomaten verwendeten Spiralfedern bei dem erfindungsgemäßen Gurtautomaten weder beim Aufnoch beim Abwickeln des Gurtbandes 7 auf die bzw. von der Wickelwelle 1 in der als Energiespeicher dienenden Spiralfeder 6 zu keinen Hystereseverlusten.

Bei allen vorstehend beschriebenen Ausführungsformen kann bei dem Gurtautomaten eine Auszugssicherung in einfacher Weise vorgesehen werden. Mit Hilfe von Auszugssicherungen ist sichergestellt, daß ein um eine bestimmte Länge ausgezogenes Gurtband nicht mehr weiter ausgezogen, sondern nur noch auf die Wickelwelle aufgewickelt werden kann. Eingesetzt werden Auszugssicherungen, beispielsweise um einen Kindersitze, die mittels eines Gurtbandes gehalten werden, sicher zu befestigen.

Eine Auszugssicherung wird beispielsweise auf folgende Weise aktiviert: das Gurtband wird vollständig von der Wickelwelle abgewickelt, d.h. vollständig ausgezogen; in diesem Zustand wird über einen Schalter beispielsweise eine Art Ratschenmechanismus eingeschaltet, der nur noch ein Drehen der Wickelwelle in einer Richtung, nämlich ein Aufwickeln des Gurtbandes auf die Wickelwelle zuläßt. Der Ratschenmechanismus wird beispielsweise erst abgeschaltet, wenn das Gurtband wieder vollständig auf der Wickelwelle aufgewickelt ist. Es sind somit zwei Schaltpunkte erforderlich, beispielsweise einer bei vollständig abgewickeltem und einer bei vollständig aufgewickeltem Gurtband.

Bei herkömmlichen Gurtautomaten, bei denen die Spiralfeder mehrere, im allgemeinen zwölf Umdrehungen beim vollständigen Abwickeln des Gurtbandes ausführt, muß diese Umdrehungsanzahl aufwendig, beispielsweise mit Hilfe eines zusätzlichen Getriebes, untersetzt werden, um beide Schaltpunkte eindeutig zu definieren.

Bei Verwenden des erfindungsgemäßen Gurtautomaten lassen sich diese beiden Schaltpunkte S1 und S2 (siehe Fig.1 bzw. 3) jedoch besonders einfach realisieren, indem beispielsweise an der Spiralscheibe 5 und 5' jeweils Mittel, beispielsweise in Form eines Ansatzes 51 bzw. 51', vorgesehen sind, durch die ein beispielsweise an dem jeweiligen Schaltpunkt S1 bzw. S2 vorgesehener Schalter aktivierbar ist. Die Auszugssicherung läßt sich bei den vorstehend beschriebenen Ausführungsformen nur deswegen so einfach realisieren, da die Spiralfeder 6 und somit auch die Spiralscheibe 5 bzw. 5' zum vollständigen Abwickeln des Gurtbandes 7 von der Wickelwelle 1 weniger als eine Umdrehung ausführen.

### Bezugszeichenliste:

- 1: Wickelwelle
- 2: Scheibe
- 3: Doppelscheibe
- 4: Doppelscheibe
- 5: Spiralscheibe
- 50: Abflachung
- 51,51': Ansatz
- 6: Spiralfeder
- 7: Gurtband
- 8: Gehäuse
- 2-3g: Band
- 3g-4k: Band
- 4k-5: Band
- P: Befestigungspunkt
- B: Berührpunkt
- B₁: Berührpunkt
- B₂: Berührpunkt
- B₃: Berührpunkt
- B₄: Berührpunkt
- M: Mittelpunkt
- S1: Schaltpunkt
- S2: Schaltpunkt

## Patentansprüche

1. Gurtautomat, bei welchem zwischen einer Wickelwelle (1), auf die ein Gurtband (7) aufwickelbar und von der das Gurtband (7) abwickelbar ist, und einem Energiespeicher (6) ein Untersetzungsgetriebe angeordnet ist, das so ausgebildet ist, daß der Verlauf der zum Abwickeln des Gurtbandes (7) erforderlichen Kraft im wesentlichen konstant ist oder linear abnimmt, **dadurch gekennzeichnet**, daß eine auf der Wickelwelle (1) vorgesehene kreisförmige Scheibe (2), mindestens eine Doppelscheibe (3,4) und eine Scheibe (5) mit einer im wesentlichen spiralförmigen Umfangslinie, über die Energie dem Energiespeicher (6) zuführt bzw. von diesem (6) abgeführt wird, jeweils mittels Bänder (2-3g, 3k-4g, 4k-5) zu einem mehrstufigen Untersetzungsgetriebe miteinander verbunden sind.

2. Gurtautomat nach Anspruch 1, dadurch **gekennzeichnet,** daß die kreisförmige Scheibe (2) mittels eines ersten Bandes (2-3g) mit einer ersten, aus zwei konzentrischen Scheiben (3g,3k) mit unterschiedlichen Radien gebildeten Doppelscheibe (3) verbunden ist, deren kleinere Scheibe (3k) mittels eines zweiten Bandes (3k-4g) mit einer zweiten, aus zwei konzentrischen Scheiben (4g, 4k) mit unterschiedlichen Radien gebildeten Doppelscheibe (4) verbunden ist, deren kleinere Scheibe (4k) mittels eines dritten Bandes (4k-5) mit der Scheibe (5) mit einer im wesentlichen spiralförmigen Umfangslinie verbunden ist.

3. Gurtautomt nach Anspruch 1 oder 2, **dadurch gekennzeichnet**, daß die Umfangslinie der Scheibe (5') zwischen spiralförmigen Teilbereichen geradlinig ist.

4. Gurtautomat nach einem der vorhergehenden Ansprüche, **dadurch gekennzeichnet**, daß zur Ausbildung einer Auszugssicherung im Bereich des Energiespeichers (6) Schaltpunkte (S1, S2) festgelegt sind, die vorzugsweise mittels eines an der jeweiligen Spiralscheibe (5, 5') vorgesehenen Mittels (51, 51') aktivierbar sind.

## Claims

1. Automatic seat-belt dispenser having disposed between a winder shaft (1), onto which a seat belt (7) can be wound and from which the seat belt (7) can be unwound, and an energy storage means (6) a multi-step down gear being made so that the course of the force required to unwind the seat belt (7) is substantially constant or decreases linearly, characterized in that a circular pulley (2) provided on the winder shaft (1), at least one double pulley (3, 4). and a pulley (5) having a substantially spiral circumferential line, by way of which energy is supplied to the energy storage means (6) or removed from said energy storage means (6) are connected with one another by means of belts (2-3g, 3k-4g, 4k-5) to a multi-step down gear.

2. Automatic seat-belt dispenser according to claim 1, characterized in that the circular pulley (2) is connected by means of a first belt (2-3g) to a first double pulley (3), formed of two concentric pulleys (3g, 3k) having different radii, the first smaller pulley (3k) of two concentric pulleys being connected by means of a second belt (3k-4g) to a second double pulley (4) formed of two concentric pulleys (4g, 4k) having different radii, the second smaller pulley (4k) being connected by means of a third belt (4k-5) to the pulley (5) having a substantially spiral circumferential line.

3. Automatic seat-belt dispenser according to claim 1 or 2, characterized in that the circumferential line of the pulley (5') is rectilinear between spiral portions.

4. Automatic seat-belt dispenser according to anyone of the preceding claims, characterized in that to provide a securing extraction locking switching points (S1, S2) are defined in the region of the energy storing means (6), and being actuated preferably by means of an element (51, 51') provided to each of the spiral pulleys (5, 5').

## Revendications

1. Enrouleur de ceinture, dans lequel une transmission à démultiplication est agencée entre un arbre d'enroulement (1), sur lequel une bande de ceinture (7) est susceptible d'être enroulée et depuis lequel la bande de ceinture (7) est susceptible d'être déroulée, et un accumulateur d'énergie (6), ladite transmission à démultiplication étant réalisée de telle façon que l'évolution de la force nécessaire pour le déroulement de la bande de ceinture (7) est sensiblement constante, ou bien décroît de façon linéaire, caractérisé en ce qu'un disque de forme circulaire (2) prévu sur l'arbre d'enroulement (1), au moins un disque double (3, 4), et un disque (5) avec une ligne périphérique sensiblement de forme spiralée, via lequel l'énergie est amenée à l'accumulateur d'énergie (6), ou respectivement prélevée de celui-ci (6), sont reliés les uns aux autres respectivement au moyen de bandes (2-3g, 3k-4g, 4k-5) pour former une transmission à démultiplication à plusieurs étages.

2. Enrouleur de ceinture selon la revendication 1, caractérisé en ce que le disque de forme circulaire (2) est relié au moyen d'une première bande (2-3g) à un premier disque double (3) formé par deux disques concentriques (3g, 3k) avec des rayons différents, parmi lesquels le petit disque (3k) est relié au moyen d'une deuxième bande (3k-4g) à un deuxième disque double (4) formé par deux disques concentriques (4g, 4k) avec des rayons différents, parmi lesquels le petit disque (4k) est relié au moyen d'une troisième bande (4k-5) au disque (5) qui présente une ligne périphérique sensiblement de forme spiralée.

3. Enrouleur de ceinture selon l'une ou l'autre des revendications 1 et 2, caractérisé en ce que la ligne périphérique du disque (5') est rectiligne entre des régions partielles de forme spiralée.

4. Enrouleur de ceinture selon l'une des revendications précédentes, caractérisé en ce que pour réaliser une sécurité anti-déroulement, des points de commutation (S1, S2) sont fixés dans la région de l'accumulateur d'énergie (6), lesquels sont susceptibles d'être activés de préférence à l'aide d'un moyen (51, 51') prévu sur le disque spiralé respectif (5, 5').
